# EUROPÄISCHE PATENTSCHRIFT

(11) **EP 3 181 013 B1**
(45) Veröffentlichungstag und Bekanntmachung des Hinweises auf die Patenterteilung: **23.08.2023**
(21) Anmeldenummer: 16200517.7
(22) Anmeldetag: 24.11.2016
(51) Int. Cl.: A47B 88/463, A47B 88/44, E05D 15/40

(54) **AUSWERFERANORDNUNG FÜR EIN BEWEGBARES MÖBELTEIL**
EJECTOR ASSEMBLY FOR A MOBILE FURNITURE ITEM
SYSTÈME D'EXTRACTEUR POUR UNE PARTIE DE MEUBLE MOBILE

(30) Priorität: 14.12.2015 DE 202015106773 U
(43) Veröffentlichungstag der Anmeldung: 21.06.2017
(73) Patentinhaber: Grass GmbH, 6973 Höchst (AT)
(72) Erfinder: Albrecht, Markus, 6890 Lustenau (AT); Baur, Stefan, 6840 Götzis (AT)
(74) Vertreter: Otten, Roth, Dobler & Partner mbB Patentanwälte

(56) Entgegenhaltungen:
- EP-B1- 2 429 339
- WO-A-2013/040611

## Beschreibung

Die Erfindung betrifft eine Auswerferanordnung für ein bewegbares Möbelteil, sowie ein Möbel mit einer solchen Vorrichtung.

### Stand der Technik

Eine Auswerferanordnung der einleitend bezeichneten Art ist bekannt und umfasst beispielsweise zwei Auswerfereinheiten.

Die Auswerferanordnung ist dazu vorgesehen, ein bewegbares Möbelteil, beispielsweise eine Schublade, in eine Öffnungsrichtung des Möbelkorpus auszustoßen. Hierzu werden die Auswerfereinheiten z.B. an der Rückseite eines Möbelkorpus positionsfest angeordnet und sind über eine Synchronisationsstange, welche eine Bewegung der Auswerferanordnung koppelt, miteinander verbunden.

Die Synchronisationsstange wird bei der Montage der Auswerferanordnung durch einen Monteur abgelängt und gemeinsam mit den Auswerfereinheiten montiert.

Eine Auswerferanordnung ist beispielsweise aus der EP 2 429 339 B1 oder der WO 2013/040611 A1 bekannt.

### Aufgabe und Vorteile der Erfindung

Der Erfindung liegt die Aufgabe zu Grunde, eine alternative Auswerferanordnung für ein bewegbares Möbelteil bereitzustellen, welche die Montage der Auswerfereinheiten am Möbelteil und/oder der Synchronisationsstange an den Auswerfereinheiten erleichtert.

Die Aufgabe wird durch die Merkmale des Anspruch 1 gelöst.

In den abhängigen Ansprüchen sind vorteilhafte und zweckmäßige Ausführungsformen der Erfindung angegeben.

Die Erfindung geht von einer Auswerferanordnung für ein bewegbares Möbelteil aus, beispielsweise eine Schublade, wobei die Auswerferanordnung aus zwei Auswerfereinheiten besteht, die über eine Synchronisationsstange miteinander verbunden sind, wobei die Auswerfereinheiten dazu vorgesehen sind, das bewegbare Möbelteil in eine Öffnungsrichtung eines Möbels in Bezug zu einem Möbelkorpus des Möbels auszuwerfen,
und wobei die Synchronisationsstange eine Schaltfunktion der Auswerfereinheiten synchronisiert.

Die Auswerfereinheit kann insbesondere an einer Unterseite eines Bodens einer Schublade montiert werden. Vorteilhaft sind zwei Auswerfereinheiten einer Auswerferanordnung links und rechts, von einer Schubladenfront aus gesehen, getrennt voneinander an der Unterseite des Schubladenbodens gegenüberliegend angeordnet. Vorstellbar ist auch, dass die Auswerfereinheiten positionsfest relativ zu einem bewegbaren Möbelteil an einem Möbelkorpus befestigt sind. Bei Aktivierung oder Auslösung einer oder beider Auswerfereinheiten, beispielsweise durch Überdrücken einer Ruheposition der Schublade durch einen Nutzer in Schließrichtung, synchronisiert die Synchronisationsstange die Auswerfereinheiten miteinander und die Auswerfereinheiten können die Schublade gemeinsam in Öffnungsrichtung auswerfen. Durch die Synchronisationsstange ist somit ein sicheres und gleichzeitiges Auslösen der beiden Auswerfereinheiten gewährleistet.

Erfindungsgemäß ist die Auswerfereinheit derart ausgestaltet, dass die Synchronisationsstange an einer Aufnahme der ersten Auswerfereinheit soweit einschiebbar ist, dass sie sich in eine Aufnahme einer gegenüberliegenden zweiten Auswerfereinheit einführen lässt, wobei Positioniermittel vorgesehen sind, um die Synchronisationsstange in einer Funktionsposition zwischen den Auswerfereinheiten zu positionieren.

Eine erfindungsgemäße Ausgestaltung der Aufnahme ermöglicht es die Synchronisationsstange nach einer festen Montage der Auswerfereinheiten, beispielsweise an der Schublade, zu montieren oder zu demontieren. Hierdurch ist eine Montage der Synchronisationsstange vereinfacht, dass sie insbesondere getrennt von der Montage der Auswerfereinheiten am bewegbaren Möbelteil erfolgen kann.

In der Funktionsposition ist die Synchronisationsstange beispielsweise zentriert zwischen den Auswerfereinheiten positioniert und steckt vorzugsweise gleich tief in beiden Auswerfereinheiten.

Die Positioniermittel ermöglichen vorteilhaft einen Längentoleranzausgleich der Synchronisationsstange. Zum Beispiel kann eine Länge der Synchronisationsstange, welche derart angepasst ist, um die beiden Auswerfereinheiten miteinander zu verbinden, um bis zu 30 mm variieren. Vorteilhaft zwischen 0 und 25 mm, zwischen 0 und 20 mm, zwischen 0 und 15 mm, zwischen 0 und 10 mm oder zwischen 0 und 5 mm. Durch die Möglichkeit eines tiefen Einschiebens in eine Auswerfereinheit lässt sich eine Längendifferenz ausgleichen.

Überdies ist es von Vorteil, dass die Auswerfereinheiten und/oder die Synchronisationsstange dazu ausgebildet sind, dass in einer montierten Position der Auswerfereinheiten am Möbel sich die Synchronisationsstange zwischen den Auswerfereinheiten einsetzen lässt. Dabei ist es denkbar, dass die Synchronisationsstange längenveränderbar, gegebenenfalls teleskopierbar ausgestaltet ist.

Weiter wird vorgeschlagen, dass die Positioniermittel mindestens ein Federelement umfassen.

Das Federelement drängt z.B. die Synchronisationsstange im montierten Zustand an den Auswerfereinheiten in die Funktionsposition.

In einer vorteilhaften Ausgestaltung der Aufnahme ist die Synchronisationsstange bei einer Montage entgegen der Kraft des Federelements in die Aufnahme einsetzbar.

Auch vorstellbar ist, dass das Positioniermittel bajonett- oder kulissenartig ausgestaltet ist. Hierdurch kann eine Synchronisationsstange bei einer Einsetzbewegung mit ihrem ersten Ende an der Auswerfereinheit geführt werden, so dass sich die Synchronisationsstange mit ihrem zweiten Ende in die der ersten Auswerfereinheit gegenüberliegend angeordnete zweite Auswerfereinheit einsetzen lässt und anschließend in die Funktionsposition zwischen den beiden Auswerfereinheiten bewegt wird, wobei die bajonett- oder kulissenartig ausgestalteten Positioniermittel eine Verriegelung der Synchronisationsstange in zumindest einer Auswerfereinheit bereitstellen können.

Erfindungsgemäß weist die Aufnahme ein Übertragungsorgan auf, welches derart ausgestaltet ist, dass die Synchronisationsstange im Wesentlichen formschlüssig mit dem Übertragungsorgan in einer Weise koppelt, dass eine Bewegung der Aufnahme auf die Synchronisationsstange übertragen werden kann, insbesondere zur gegenüberliegenden Auswerfereinheit. Vorteilhaft ist eine Drehbewegung und/oder eine lineare Schiebebewegung der Aufnahme aufgrund des Übertragungsorgans auf die Synchronisationsstange übertragbar.

Erfindungsgemäß weist die Synchronisationsstange eine im Querschnitt zu einer Längsachse eine unrunde Kontur auf, durch welche die Synchronisationsstange in bekannter Weise formschlüssig an der Aufnahme anordenbar ist. Beispielsweise ist die Kontur rechteckig, insbesondere mehreckig, oder elliptisch ausgebildet.

Bevorzugterweise umfasst das Übertragungsorgan der Aufnahme eine zur Außenkontur der Synchronisationsstange komplementäre Kontur. Beispielsweise ist das Übertragungsorgan röhrenartig ausgestaltet, mit einer Innenkontur, welche komplementär zur Außenkontur der Synchronisationsstange ist.

Auch ist es von Vorteil, dass die Aufnahme ein verlagerbares Führungselement umfasst, welches im montierten Zustand der Synchronisationsstange an der Aufnahme zwischen Positioniermittel und Synchronisationsstange wirkt.

Das Führungselement leitet z.B. eine Kraft des Positioniermittels und damit vorteilhaft eine Bewegung des Positioniermittels auf eine in der Aufnahme angeordnete Synchronisationsstange weiter.

Beispielsweise leitet das Führungselement die Kraft des Positioniermittels bei in die Aufnahme eingesetzter Synchronisationsstange in einer Kraftrichtung parallel zu einer Drehachse der Aufnahme und/oder einer Längsachse des Führungselements und/oder einer Längsachse der Synchronisationsstange auf die Synchronisationsstange. Insbesondere fallen die Drehachse der Aufnahme und/oder die Längsachse des Führungselements und/oder die Längsachse der in die Aufnahme eingesetzten Synchronisationsstange zusammen.

Bevorzugterweise wird eine Bewegung des Führungselements seinerseits durch eine an der Aufnahme ausgebildete Führungskontur geführt, insbesondere entspricht diese Führungskontur der Kontur des Übertragungsorgans. Die Bewegung des Führungselements ist im montierten Zustand der Auswerfereinheit vorteilhaft senkrecht zu einer Bewegungsrichtung der Schublade und parallel zum Schubladenboden ausgebildet bzw. parallel zur Längsachse der in die Aufnahme eingesetzten Synchronisationsstange.

In einer vorteilhaften Modifikation der Auswerferanordnung weist das Führungselement ein Kopplungsorgan auf, welches mit der Synchronisationsstange formschlüssig koppeln kann.

Vorteilhafterweise fängt das Kopplungsorgan des Führungselements die Synchronisationsstange derart, insbesondere eine Stirnseite der Synchronisationsstange, dass das Kopplungsorgan und die Synchronisationsstange im Wesentlichen formschlüssig zumindest in einer Richtung senkrecht zu einer Kraft des Positioniermittels auf die Synchronisationsstange gehalten wird.

Auch ist es von Vorteil, dass die Aufnahme ein Führungsorgan für das Positioniermittel aufweist.

Durch das Führungsorgan ist eine Bewegungsrichtung des Positioniermittels, beispielsweise des Federelements, und/oder des Führungselements, vorgegeben. Vorteilhaft sind das Positioniermittel, insbesondere das Federelement, und/oder das Führungselement mittels des Führungsorgans z.B. linear bewegbar gelagert. Dadurch kann das Positioniermittel und/oder das Führungselement bei einer Bewegung nicht verkanten bzw. verklemmen.

Weiter wird vorgeschlagen, dass das Führungselement stiftförmig ausgestaltet ist.

Eine stiftförmige Ausgestaltung des Führungselements ermöglicht vorteilhaft das Führungselement an zwei sich gegenüberliegenden Enden bewegbar, beipielsweise linear verschiebbar und/oder drehbar, an der Aufnahme, insbesondere am Führungsorgan zu lagern.

Überdies ist es vorteilhaft, dass das Führungselement einen Anschlag aufweist.

Durch einen Anschlag des Führungselements kann das Federelement derart an der Aufnahme und am Führungselement angeordnet sein, dass es unter einer Vorspannung steht.

Vorteilhafterweise umfasst die Aufnahme ein Halteelement und der Anschlag des Führungselements ist dazu ausgebildet am Halteelement anzustoßen, so dass das Führungselement im montierten Zustand an der Aufnahme sich nicht von dieser lösen kann.

Insbesondere wird das Führungselement und damit der Anschlag des Führungselements durch die Kraft des Positioniermittels, z.B. des Federelements, gegen das Halteelement gedrängt. Stößt der Anschlag des Führungselements am Halteelement an, so wird eine Bewegung des Führungselements gestoppt, und das Federelement unterliegt in dieser Position einer Vorspannung.

Auch ist es von Vorteil, dass das Führungselement dazu ausgestaltet ist, das Positioniermittel, beispielsweise eine Schraubenfeder, zu führen.

Durch die beispielsweise stiftförmige Ausgestaltung des Führungselements kann eine Kraft des Positioniermittels, insbesondere der Schraubenfeder, vorteilhaft linear übertragen werden. Denkbar ist auch, dass eine Kraft einer Spiralfedern oder einer Schenkelfeder durch das Führungselement übertragbar ist.

### Beschreibung des Ausführungsbeispiels

Ein Ausführungsbeispiel wird anhand der nachstehenden schematischen Zeichnungen unter Angabe weiterer Einzelheiten und Vorteile näher erläutert.

Es zeigen:
- Figur 1: eine perspektivische Ansicht auf ein Möbel mit einer Schublade und daran angeordneter Auswerferanordnung,
- Figur 2: eine perspektivische Explosionsdarstellung einer Aufnahme einer Auswerfereinheit der Auswerferanordnung und
- Figuren 3 bis 13: ein Montageablauf einer Synchronisationsstange an einer Auswerferanordnung in perspektivischer Ansicht auf eine Unterseite eines Schubladenbodens (Figuren 3, 4, 6 - 12) mit daran angeordneter Auswerferanordnung bzw. in perspektivischer Ansicht auf eine Aufnahme aus Figur 2 (Figuren 5, 13).

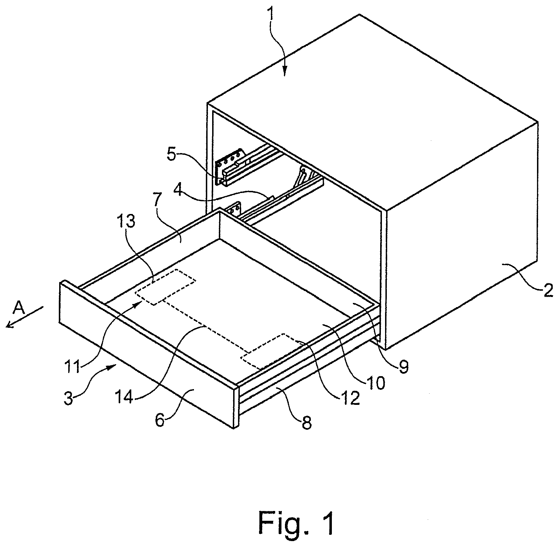

In Figur 1 ist ein Möbel 1 gezeigt. Das Möbel 1 umfasst einen Möbelkorpus 2 und eine Schublade 3 im geöffneten Zustand am Möbelkorpus 2. Die Schublade 3 ist am Möbelkorpus 1 an Ausziehführungen 4, 5 verschiebbar geführt und umfasst eine Schubladenfront 6, Schubladenseitenwände 7, 8, eine Rückwand 9 und einen Schubladenboden 10. An einer Unterseite des Schubladenbodens 10 ist eine Auswerferanordnung 11 montiert (gestrichelt dargestellt). Die Auswerferanordnung 11 umfasst zwei Auswerfereinheiten 12 und 13, welche über eine Synchronisationsstange 14 (gestrichelt dargestellt) miteinander verbunden sind.

Die Schublade 3 lässt sich in eine Öffnungsrichtung A aus einem geschlossenen Zustand am Möbelkorpus 2 mittels der durch die Synchronisationstange 14 synchronisierten Auswerfereinheiten 12 der Auswerferanordnung 11 in einen geöffneten Zustand am Möbelkorpus 2 auswerfen.

Die Auswerfereinheiten 12, 13 werden beispielsweise durch einen Nutzer von außen dadurch aktiviert, dass dieser die Schublade 3 entgegen einer Öffnungsrichtung A, beispielsweise durch einen Fingerdruck, bewegt und dadurch zumindest eine Auswerfereinheit 12, 13 aktiviert. Durch die Synchronisationsstange 14 wird bei Aktivierung einer Auswerfereinheit 12, 13 auch die gegenüberliegend angeordnete zweite Auswerfereinheit 12, 13 aktiviert und mit einer Bewegung der ersten Auswerfereinheit 12, 13 synchronisiert.

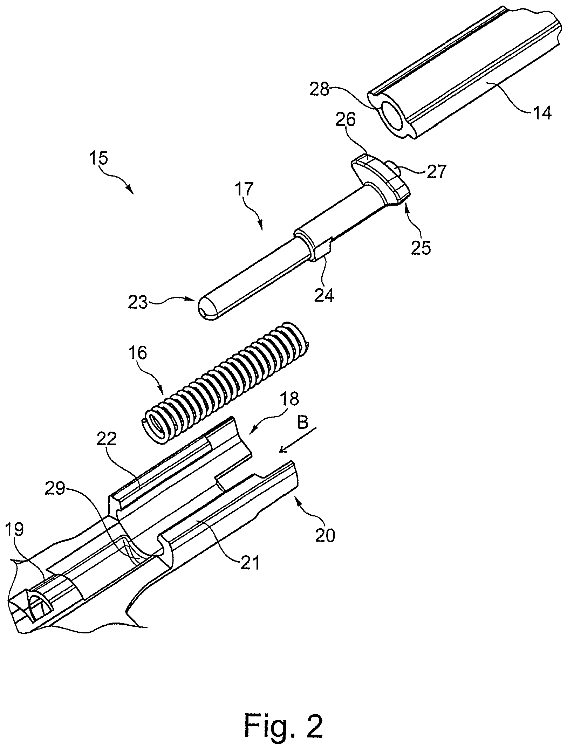

Eine Aufnahme 15 einer Auswerfereinheit 12, 13 umfasst ein Positioniermittel, welches beispielsweise als Schraubenfeder 16 ausgebildet ist, ein stiftartiges Führungselement 17, ein Übertragungsorgan 18 und ein Führungsorgan 19 (Figur 2).

Die Synchronisationsstange 14 besitzt senkrecht zu ihrer Längsachse eine UFO-artige Außenkontur und entlang ihrer Längsachse einen hohlen zylinderartigen Kern 28. Durch die UFO-artige Außenkontur ist die Außenkontur unrund und kann dadurch im Wesentlichen einen Formschluss im eingesetzten Zustand an der Aufnahme 15 mit dem Übertragungsorgan 18 ausbilden. Das Übertragungsorgan 18 umfasst hierzu eine Innenkontur welche zur Außenkontur der Synchronisationsstange 14 identisch oder dieser zumindest ähnlich ist, sodass eine Bewegung der Aufnahme 15 auf die Synchronisationsstange 14 oder umgekehrt übertragen werden kann.

Das Übertragungsorgan 18 ist weiterhin derart ausgestaltet, dass die Synchronisationsstange 14 in einem vorderen Bereich 20 senkrecht zur Einsteckrichtung B in das Übertragungsorgan 18 eingesetzt werden kann. Damit eine Bewegung vom Übertragungsorgan 18 auf die Synchronisationsstange 14 übertragen werden kann muss die Synchronisationsstange 14 anschließend in Einsteckrichtung B in das Übertragungsorgan 18 eingesteckt werden. Hierzu besitzt das Übertragungsorgan 18 Lippen 21, 22, welche die Synchronisationsstange 14 beim Einsteckvorgang zum einen führen und zum anderen eine Kraft- bzw. Drehbewegungsübertragung gewährleistet, indem die Lippen 21, 22 die UFO-artige Ränder der Außenkontur umfassen oder umgreifen.

Das Führungselement 17 ist an einem ersten Ende 23 beispielsweise zylinderförmig ausgestaltet, sodass es am Führungsorgan 19 drehbar gelagert werden kann. Außerdem ist der Außendurchmesser des zylinderförmigen Endes 23, derart dass die Schraubenfeder 16 auf das Ende 23 aufgesteckt werden kann. Im eingesetzten Zustand der Schraubfeder 16 und des Führungselements 17 an der Aufnahme 15 stößt die Schraubenfeder 16 mit einem ersten Ende gegen einen Anschlag an der Aufnahme 15 (nicht gezeigt) und mit einem dem ersten Ende gegenüberliegenden zweiten Ende gegen einen Anschlag 24 des Führungselements 17.

Das Führungselement 17 umfasst an einem dem ersten Ende 23 gegenüberliegenden zweiten Ende ein Kopplungsorgan 25. Das Kopplungsorgan 25 ist z.B. derart ausgestaltet, dass es eine Außenkontur 26 aufweist, welche identisch ist zur Außenkontur der Synchronisationsstange 14. Hierdurch wird das Führungselement 17 im eingesetzten Zustand an der Aufnahme 15 durch das Übertragungsorgan 18 am zweiten Ende linear bewegbar geführt. Des Weiteren besitzt das Kopplungsorgan 25 ein Kopplungselement 27, welches bei der Montage der Synchronisationsstange 14 in den hohlen Kern 28 der Synchronisationsstange 14 eingreift und diese senkrecht zu ihrer Längsachse am Kopplungsorgan 25 fixiert, sodass eine Bewegung, insbesondere in Einsteckrichtung B an der Auswerfereinheit 12 bzw. in Einsteckrichtung C an der Auswerfereinheit 13, der Synchronisationsstange 14 geführt ist.

Im zusammengebauten Zustand der Aufnahme 15 stößt das Führungselement 17 mit seinem Anschlag 24 an ein Halteelement 29 der Aufnahme 15. Hierdurch kann das Führungselement 17 nicht aus der Aufnahme 15 fallen. Weiterhin ist dadurch die Schraubenfeder 16 unter einer Vorspannung gehalten.

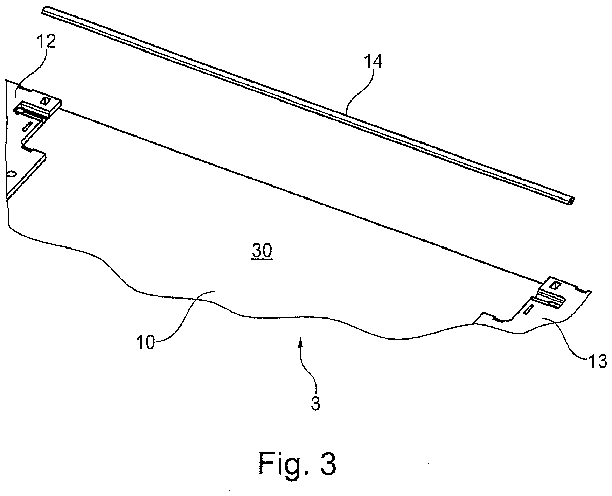

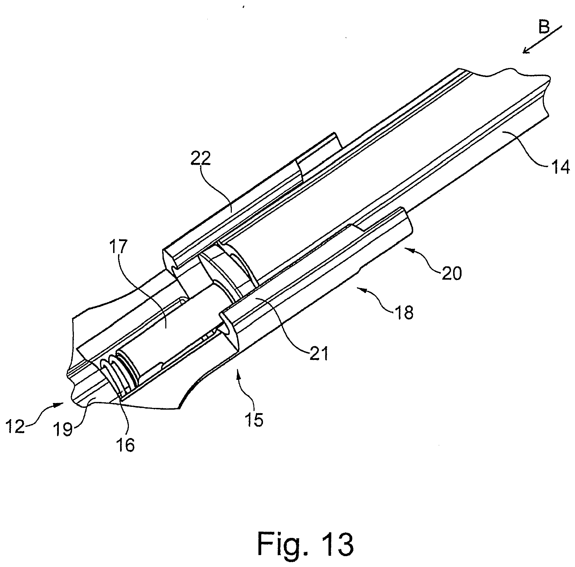

Anhand der Figuren 3 bis 13 wird im Folgenden eine Montage der Synchronisationsstange 14 an die an der Schubladenbodenunterseite 30 montierten Auswerferanordnung 11 beschrieben:
Im ersten Montageschritt wird durch einen Monteur an der Schubladenbodenunterseite 30 auf der rechten Seite die Auswerfereinheit 13 und auf der linken Seite gegenüberliegend die Auswerfereinheit 12 montiert, beispielsweise angeschraubt oder angeklebt. Folgend wird, entsprechend dem Abstand der Auswerfereinheiten 12, 13, die Länge der Synchronisationsstange 14 durch den Monteur angepasst, zum Beispiel wird die Synchronisationsstange 14 zugeschnitten (Figur 3).

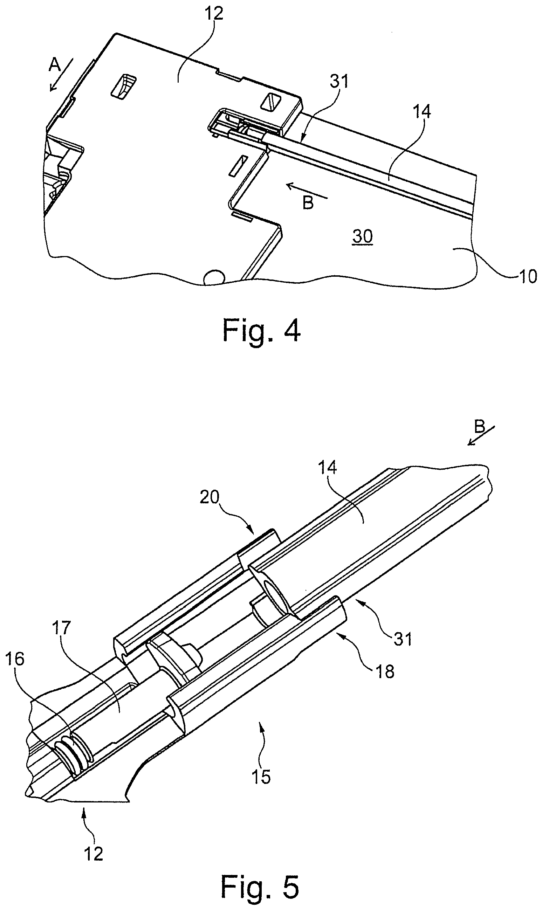

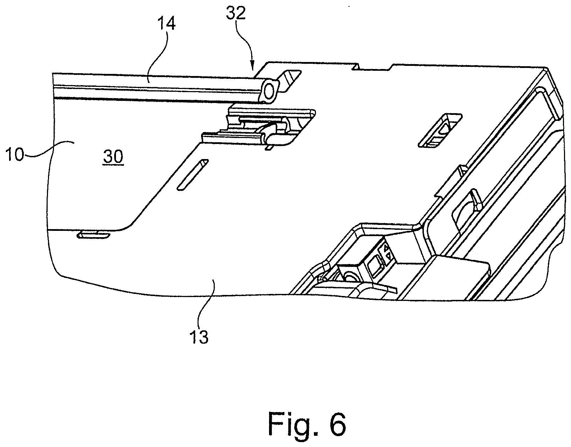

In einem darauf folgenden Montageschritt wird die Synchronisationsstange 14 mit einem ersten Ende 31 bspw. in die linke Auswerfereinheit 12 eingesetzt (Figur 4, 5). In diesem Montagezustand ist die Synchronisationsstange 14 noch derart zwischen den Auswerfereinheiten 12, 13 angeordnet, dass sie mit ihrem dem ersten Ende 31 gegenüberliegenden zweiten Ende 32 nicht in die Aufnahme 15 der Auswerfereinheit 13 eingesetzt werden kann (Figur 6), da die Länge der Synchronisationsstange 14 größer ist als die Distanz zwischen den Einsetzbereichen 20 der Aufnahmen 15 der Auswerfereinheiten 12, 13.

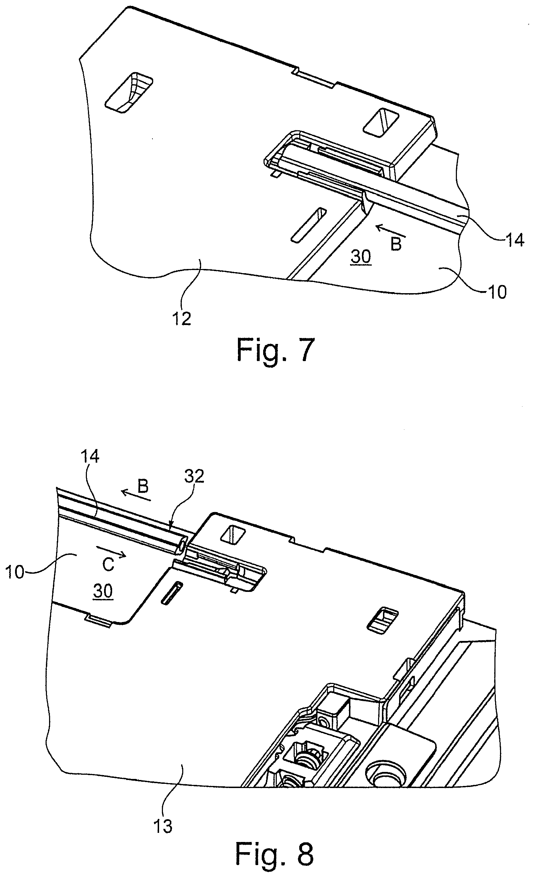

Damit die Synchronisationsstange 14 in die Aufnahme 15 der gegenüberliegend angeordneten Auswerfereinheit 13 eingesetzt werden kann, wird die Synchronisationsstange 14 in einem weiteren Montageschritt in Einsteckrichtung B entgegen einer Federkraft der Schraubenfeder 16 in die Aufnahme 15 der Auswerfereinheit 12 eingeschoben. Die Synchronisationsstange 14 wird hierbei durch einen Monteur so weit in die Aufnahme 15 der Auswerfereinheit 12 eingeschoben, bis die Synchronisationsstange 14 mit ihrem gegenüberliegenden Ende 32 in die gegenüberliegende Aufnahme 15 der Auswerfereinheit 13 eingesetzt werden kann (Figur 7, 8).

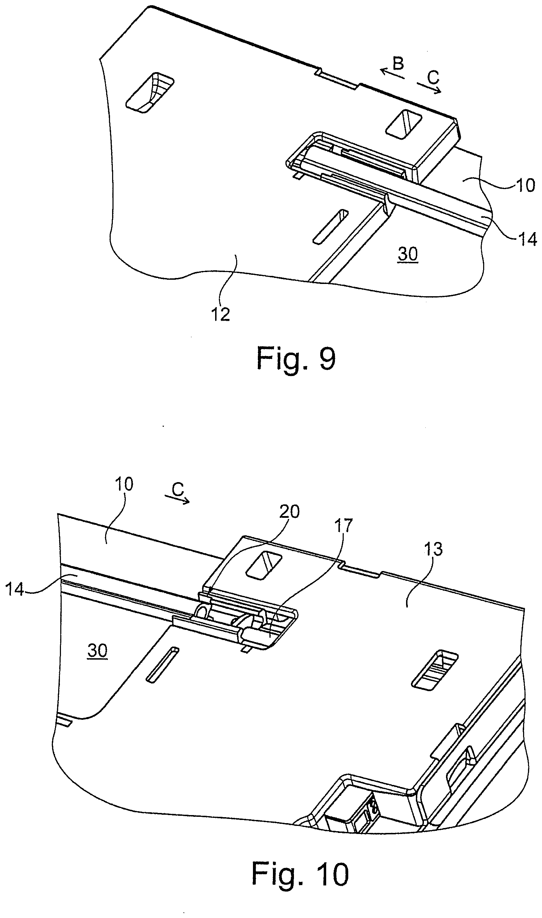

Ist die Synchronisationsstange 14 so weit in die Auswerfereinheit 12 eingeschoben, dass sie ihrem gegenüberliegenden Ende 32 in die Auswerfereinheit 13 eingesetzt werden kann, so führt der Monteur das Ende 32 an den Einsetzbereich 20 der Auswerfereinheit 13 heran und setzt die Synchronisationsstange 14 mit dem Ende 32 in die Aufnahme 15 der Auswerfereinheit 13 ein. Hierbei unterstützt ihn die Federkraft der Schraubenfeder 16 der Auswerfereinheit 12, indem diese über das Führungselement 17 die Synchronisationsstange 14 in Einsteckrichtung C der Auswerfereinheit 13 drängt (Figur 9, 10).

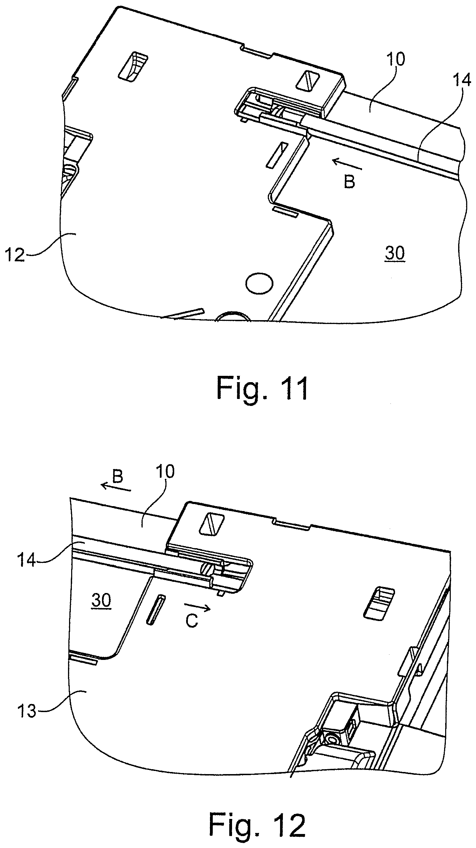

Im abschließenden Montageschritt lässt der Monteur die Synchronisationsstange 14 los und diese wird durch die beiden Schraubenfedern der Auswerfereinheiten 12 und 13 zwischen den Auswerfereinheiten 12 und 13 in ihrer Funktionsposition zentriert (Figur 11, 12).

### Bezugszeichenliste

- 1: Möbel
- 2: Möbelkorpus
- 3: Schublade
- 4, 5: Ausziehführung
- 6: Front
- 7, 8: Seitenwand
- 9: Rückwand
- 10: Boden
- 11: Auswerferanordnung
- 12, 13: Auswerfereinheit
- 14: Synchronisationsstange
- 15: Aufnahme
- 16: Schraubenfeder
- 17: Führungselement
- 18: Übertragungsorgan
- 19: Führungsorgan
- 20: Bereich
- 21, 22: Lippe
- 23: Ende
- 24: Anschlag
- 25: Kopplungsorgan
- 26: Außenkontur
- 27: Kopplungselement
- 28: Kern
- 29: Halteelement
- 30: Unterseiten
- 31, 32: Ende

## Patentansprüche

1. Auswerferanordnung (11) für ein bewegbares Möbelteil (3), beispielsweise eine Schublade (3), bestehend aus zwei Auswerfereinheiten (12, 13), die über eine Synchronisationsstange (14) miteinander verbunden sind, wobei die Auswerfereinheiten (12, 13) dazu vorgesehen sind, das bewegbare Möbelteil (3) in eine Öffnungsrichtung eines Möbels (1) in Bezug zu einem Möbelkorpus (2) des Möbels (1) auszuwerfen, und wobei die Synchronisationsstange (14) eine Schaltfunktion der Auswerfereinheiten (12, 13) synchronisiert, wobei zumindest eine Auswerfereinheit (12, 13) derart ausgestaltet ist, dass die Synchronisationsstange (14) an einer Aufnahme (15) der ersten Auswerfereinheit (12, 13) soweit in eine Einsteckrichtung B einschiebbar ist, dass sie sich in eine Aufnahme (15) einer gegenüberliegenden zweiten Auswerfereinheit (12, 13) einführen lässt, wobei Positioniermittel vorgesehen sind, um die Synchronisationsstange (14) in einer Funktionsposition zwischen den Auswerfereinheiten (12, 13) zu positionieren, **dadurch gekennzeichnet, dass** die Aufnahme (15) der ersten Auswerfereinheit (12) ein Übertragungsorgan (18) umfasst, welches derart ausgestaltet ist, dass die Synchronisationsstange (14) an der Aufnahme (15) der ersten Auswerfereinheit (12) in einem vorderen Bereich (20) in einer ersten, senkrecht zur Einsteckrichtung B erfolgenden . Bewegung in das Übertragungsorgan (18) einsetzbar und anschließend in einer weiteren Bewegung in Einsteckrichtung B in das Übertragungsorgan (18) einsteckbar ist, wobei das Übertragungsorgan (18) Lippen (21, 22) besitzt, welche die Synchronisationsstange (14) beim Einsteckvorgang in die Aufnahme (15) der ersten Auswerfereinheit (12) führen und wobei die Lippen (21, 22) eine im Querschnitt zur Längsachse der Synchronisationsstange unrunde Außenkontur der Synchronisationsstange (14) umfassen oder umgreifen, sodass die Synchronisationsstange (14) im Wesentlichen formschlüssig mit dem Übertragungsorgan (18) in einer Weise koppelt, dass eine Kraft oder Drehbewegung der Aufnahme (15) auf die Synchronisationsstange (18) übertragen werden kann.

2. Auswerferanordnung (11) für ein bewegbares Möbelteil (3) nach dem Anspruch 1, **dadurch gekennzeichnet, dass** die Auswerfereinheiten (12, 13) und/oder die Synchronisationsstange (14) dazu ausgebildet sind, dass in einer montierten Position der Auswerfereinheiten (12, 13) am Möbel (1) sich die Synchronisationsstange (14) zwischen den Auswerfereinheiten (12, 13) einsetzen lässt.

3. Auswerferanordnung (11) für ein bewegbares Möbelteil (3) nach einem der vorangegangenen Ansprüche, **dadurch gekennzeichnet, dass** die Positioniermittel mindestens ein Federelement (16) umfassen.

4. Auswerferanordnung (11) für ein bewegbares Möbelteil (3) nach einem der vorangegangenen Ansprüche, **dadurch gekennzeichnet, dass** die Aufnahme (15) ein verlagerbares Führungselement (17) umfasst, welches im montierten Zustand der Synchronisationsstange (14) an der Aufnahme (15) zwischen Positioniermittel und Synchronisationsstange (14) wirkt.

5. Auswerferanordnung (11) für ein bewegbares Möbelteil (3) nach einem der vorangegangenen Ansprüche, **dadurch gekennzeichnet, dass** das Führungselement (17) ein Kopplungsorgan (25) aufweist, welches mit der Synchronisationsstange (14) formschlüssig koppeln kann.

6. Auswerferanordnung (11) für ein bewegbares Möbelteil (3) nach einem der vorangegangenen Ansprüche, **dadurch gekennzeichnet, dass** die Aufnahme ein Führungsorgan (19) für das Positioniermittel aufweist.

7. Auswerferanordnung (11) für ein bewegbares Möbelteil (3) nach einem der vorangegangenen Ansprüche, **dadurch gekennzeichnet, dass** das Führungselement (17) stiftförmig ausgestaltet ist.

8. Auswerferanordnung (11) für ein bewegbares Möbelteil (3) nach einem der vorangegangenen Ansprüche, **dadurch gekennzeichnet, dass** das Führungselement (17) einen Anschlag (24) aufweist.

9. Auswerferanordnung (11) für ein bewegbares Möbelteil (3) nach einem der vorangegangenen Ansprüche, **dadurch gekennzeichnet, dass** die Aufnahme (15) ein Halteelement (29) umfasst und der Anschlag (24) des Führungselements (17) dazu ausgebildet ist am Halteelement (29) anzustoßen, so dass das Führungselement (17) im montierten Zustand an der Aufnahme (15) sich nicht von dieser lösen kann.

10. Auswerferanordnung (11) für ein bewegbares Möbelteil (3) nach einem der vorangegangenen Ansprüche, **dadurch gekennzeichnet, dass** das Führungselement (17) dazu ausgestaltet ist, das Positioniermittel zu führen, beispielsweise eine Schraubenfeder (16).

11. Möbel (1) mit einer Auswerferanordnung (11) für ein bewegbares Möbelteil (3) nach einem der vorangegangenen Ansprüchen 1 bis 10.

## Claims

1. Ejector assembly (11) for a movable furniture part (3), for example a drawer (3), composed of two ejector units (12, 13) which are interconnected by a synchronizing bar (14), wherein the ejector units (12, 13) are provided for ejecting the movable furniture part (3) in an opening direction of an item of furniture (1) in relation to a furniture base unit (2) of the item of furniture (1), and wherein the synchronizing bar (14) synchronizes a switching function of the ejector units (12, 13), wherein at least one ejector unit (12, 13) is designed in such a manner that the synchronizing bar (14) on a receptacle (15) of the first ejector unit (12, 13) is slidable so far in an insertion direction B that said synchronizing bar (14) is able to be introduced into a receptacle (15) of an opposite second ejector unit (12, 13), wherein positioning means for positioning the synchronizing bar (14) in a functional position between the ejector units (12, 13) are provided, **characterized in that** the receptacle (15) of the first ejector unit (12) comprises a transmission member (18) which is designed in such a manner that the synchronizing bar (14) on the receptacle (15) of the first ejector unit (12) in a front region (20), in a first movement performed perpendicularly to the insertion direction B, is insertable into the transmission member (18) and subsequently, in a further movement in the insertion direction B, is able to be plugged into the transmission member (18), wherein the transmission member (18) possesses lips (21, 22) which guide the synchronizing bar (14) during the insertion procedure into the receptacle (15) of the first ejector unit (12), and wherein the lips (21, 22) comprise or encompass an external contour of the synchronizing bar (14) that in the cross section of the longitudinal axis of the synchronizing bar is non-circular, so that the synchronizing bar (14) couples to the transmission member (18) in a substantially form-fitting manner in such a way that a force or rotating movement of the receptacle (15) can be transmitted to the synchronizing bar (18).

2. Ejector assembly (11) for a movable furniture part (3) according to Claim 1, **characterized in that** the ejector units (12, 13) and/or the synchronizing bar (14) are/is configured such that the synchronizing bar (14), in a fitted position of the ejector units (12, 13) on the item of furniture (1), may be inserted between the ejector units (12, 13).

3. Ejector assembly (11) for a movable furniture part (3) according to one of the preceding claims, **characterized in that** the positioning means comprise at least one spring element (16).

4. Ejector assembly (11) for a movable furniture part (3) according to one of the preceding claims, **characterized in that** the receptacle (15) comprises a repositionable guide element (17) which in the fitted state of the synchronizing bar (14) on the receptacle (15) acts between the positioning means and the synchronizing bar (14).

5. Ejector assembly (11) for a movable furniture part (3) according to one of the preceding claims, **characterized in that** the guide element (17) has a coupling member (25) which can couple to the synchronizing bar (14) in a form-fitting manner.

6. Ejector assembly (11) for a movable furniture part (3) according to one of the preceding claims, **characterized in that** the receptacle has a guide member (19) for the positioning means.

7. Ejector assembly (11) for a movable furniture part (3) according to one of the preceding claims, **characterized in that** the guide element (17) is designed so as to be pin-shaped.

8. Ejector assembly (11) for a movable furniture part (3) according to one of the preceding claims, **characterized in that** the guide element (17) has a detent (24).

9. Ejector assembly (11) for a movable furniture part (3) according to one of the preceding claims, **characterized in that** the receptacle (15) comprises a retaining element (29), and the detent (24) of the guide element (17) is configured so as to abut the retaining element (29) such that the guide element (17) in the fitted state on the receptacle (15) cannot be released from the latter.

10. Ejector assembly (11) for a movable furniture part (3) according to one of the preceding claims, **characterized in that** the guide element (17) is designed for guiding the positioning means, for example a coil spring (16).

11. Item of furniture (1) having an ejector assembly (11) for a movable furniture part (3) according to one of preceding Claims 1 to 10.

## Revendications

1. Agencement d'éjecteur (11) pour une partie de meuble mobile (3), par exemple un tiroir (3), constitué de deux unités d'éjecteur (12, 13), qui sont reliées l'une à l'autre par l'intermédiaire d'une barre de synchronisation (14), les unités d'éjecteur (12, 13) étant prévues pour éjecter la partie de meuble mobile (3) dans une direction d'ouverture d'un meuble (1) par rapport à un corps de meuble (2) du meuble (1), et la barre de synchronisation (14) synchronisant une fonction de commutation des unités d'éjecteur (12, 13), au moins une unité d'éjecteur (12, 13) étant conçue de telle sorte que la barre de synchronisation (14) peut être insérée au niveau d'un logement (15) de la première unité d'éjecteur (12, 13) dans une direction d'enfichage B dans une mesure telle qu'elle peut être introduite dans un logement (15) d'une deuxième unité d'éjecteur (12, 13) opposée, des moyens de positionnement étant prévus pour positionner la barre de synchronisation (14) dans une position fonctionnelle entre les unités d'éjecteur (12, 13), **caractérisé en ce que** le logement (15) de la première unité d'éjecteur (12) comprend un organe de transmission (18) qui est conçu de telle sorte que la barre de synchronisation (14) peut être insérée dans l'organe de transmission (18) au niveau du logement (15) de la première unité d'éjecteur (12) dans une zone avant (20) selon un premier mouvement ayant lieu perpendiculairement à la direction d'enfichage B, et peut ensuite être enfichée dans l'organe de transmission (18) selon un mouvement ultérieur dans la direction d'enfichage B, l'organe de transmission (18) possédant des lèvres (21, 22) qui guident la barre de synchronisation (14) dans le logement (15) de la première unité d'éjecteur (12) lors de l'opération d'enfichage, et les lèvres (21, 22) englobant ou entourant un contour extérieur de la barre de synchronisation (14), non rond en section transversale par rapport à l'axe longitudinal de la barre de synchronisation, de telle sorte que la barre de synchronisation (14) s'accouple essentiellement par complémentarité de forme avec l'organe de transmission (18) d'une manière telle qu'une force ou un mouvement de rotation du logement (15) peut être transmis à la barre de synchronisation (18).

2. Agencement d'éjecteur (11) pour une partie de meuble mobile (3) selon la revendication 1, **caractérisé en ce que** les unités d'éjecteur (12, 13) et/ou la barre de synchronisation (14) sont configurées de telle sorte que, dans une position montée des unités d'éjecteur (12, 13) sur le meuble (1), la barre de synchronisation (14) peut être insérée entre les unités d'éjecteur (12, 13).

3. Agencement d'éjecteur (11) pour une partie de meuble mobile (3) selon l'une quelconque des revendications précédentes, **caractérisé en ce que** les moyens de positionnement comprennent au moins un élément de ressort (16) .

4. Agencement d'éjecteur (11) pour une partie de meuble mobile (3) selon l'une quelconque des revendications précédentes, **caractérisé en ce que** le logement (15) comprend un élément de guidage déplaçable (17) qui, à l'état monté de la barre de synchronisation (14) sur le logement (15), agit entre les moyens de positionnement et la barre de synchronisation (14).

5. Agencement d'éjecteur (11) pour une partie de meuble mobile (3) selon l'une quelconque des revendications précédentes, **caractérisé en ce que** l'élément de guidage (17) présente un organe d'accouplement (25) qui peut s'accoupler par complémentarité de forme avec la barre de synchronisation (14).

6. Agencement d'éjecteur (11) pour une partie de meuble mobile (3) selon l'une quelconque des revendications précédentes, **caractérisé en ce que** le logement présente un organe de guidage (19) pour le moyen de positionnement.

7. Agencement d'éjecteur (11) pour une partie de meuble mobile (3) selon l'une quelconque des revendications précédentes, **caractérisé en ce que** l'élément de guidage (17) est conçu en forme de broche.

8. Agencement d'éjecteur (11) pour une partie de meuble mobile (3) selon l'une quelconque des revendications précédentes, **caractérisé en ce que** l'élément de guidage (17) présente une butée (24).

9. Agencement d'éjecteur (11) pour une partie de meuble mobile (3) selon l'une quelconque des revendications précédentes, **caractérisé en ce que** le logement (15) comprend un élément de retenue (29) et la butée (24) de l'élément de guidage (17) est configurée pour buter contre l'élément de retenue (29) de telle sorte que l'élément de guidage (17) ne peut pas se détacher du logement (15) à l'état monté sur celui-ci.

10. Agencement d'éjecteur (11) pour une partie de meuble mobile (3) selon l'une quelconque des revendications précédentes, **caractérisé en ce que** l'élément de guidage (17) est conçu pour guider le moyen de positionnement, par exemple un ressort hélicoïdal (16).

11. Meuble (1) avec un agencement d'éjecteur (11) pour une partie de meuble mobile (3) selon l'une quelconque des revendications 1 à 10 précédentes.
